# EUROPEAN PATENT SPECIFICATION

(11) **EP 0 341 964 B1**
(45) Date of publication and mention of the grant of the patent: **21.07.1993**
(21) Application number: 89304648.2
(22) Date of filing: 08.05.1989
(51) Int. Cl.: G01L 9/06, G01L 1/18

(54) **Silicon micro sensor and manufacturing method therefor**
Silizium-Mikro-Wandler und Herstellungsverfahren dazu
Microtransducteur à silicium et son procédé de fabrication

(30) Priority: 07.05.1988 JP 111290/88
(43) Date of publication of application: 15.11.1989
(73) Proprietor: SHARP KABUSHIKI KAISHA, Osaka 545 (JP)
(72) Inventor: Furubayashi, Hisatoshi, Yamato kouriyama-shi Nara (JP); Inami, Yasukiko, Nara-shi Nara (JP)
(74) Representative: Brown, Kenneth Richard

(56) References cited:
- GB-A- 2 093 272
- GB-A- 2 179 679

## Description

The present invention relates to a silicon micro sensor for use in an infrared sensor, flow sensor, gas sensor, pressure sensor, vibration sensor, acceleration sensor or the like, which is manufactured using an anisotropic etching method for machining a silicon substrate.

In an infrared sensor, flow sensor or gas sensor which utilises heat transfer, the heater and detection elements thereof are generally made as fine and as thin as possible to enable a high sensitivity and responsiveness and a lower consumption of electric power to be obtained by minimising the heat capacities of the heater element and the detection element.

In a sensor having a vibrating element, such as a pressure sensor, a vibration sensor or an acceleration sensor, it is possible to minimise the dimensions of the sensor by thinning the vibration element and providing a support element for supporting the vibration element. In this way, the sensor is able to show a high sensitivity, since the vibration element is vibrated even by a minor force.

Further, in all of the above types of sensor, a high sensitivity, minimisation of the size and hybridation or integration of a number of sensors becomes possible if the sensing element is formed on a support member which comprises a thin film.

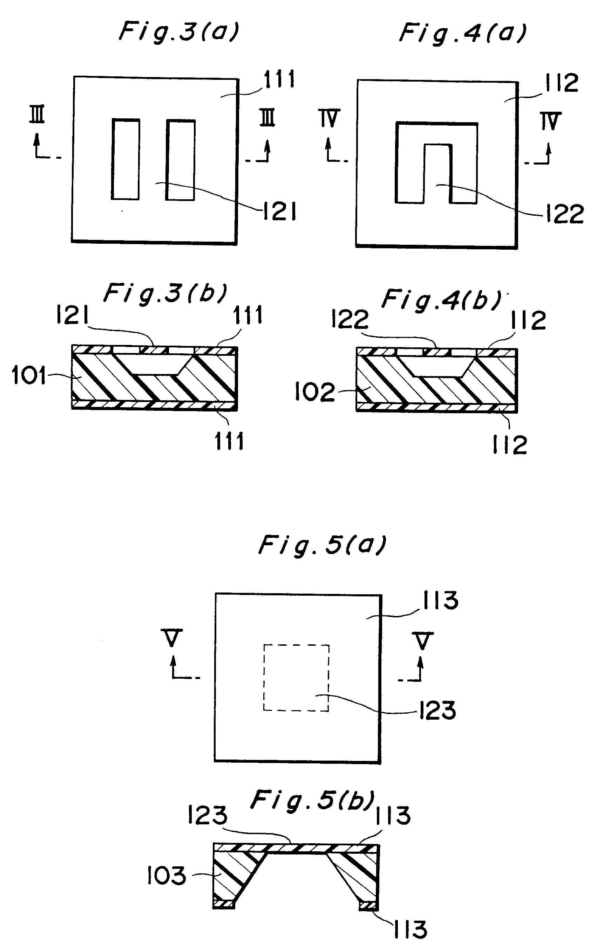

For these reasons, silicon micro sensors which have support elements formed by thin films have been developed in recent years using so-called micro machining techniques wherein photo-lithography is used to etch silicon elements into fine structures by utilising the anisotropic property of the silicon crystal. There are many types of support element for supporting the sensor element, including the bridge type, the cantilever type and the diaphragm type, as shown in Figs. 3, 4 and 5, respectively.

In the manufacture of such silicon micro sensors, silicon oxide films 111, 112, and 113 are first formed on respective silicon substrates 101, 102 and 103 using a thermal oxidation or CVD method. Then, each of the silicon oxide films 111 to 113 is patterned to form a mask and each of the silicon substrates 101 to 103 is etched anisotropically.

Thus, support elements 121, 122 and 123 of bridge type, cantilever type and diaphragm type are formed as portions of the respective silicon oxide films 111, 112 and 113 used as a mask, as clearly shown in Figs. 3(b), 4(b) and 5(b).

However, in forming the silicon oxide film using thermal oxidation or CVD, the surface of the silicon substrate is heated up to a temperature of 600 to 1,000°C. At such a high temperature, thermal stress is generated in the silicon oxide film due to the difference between the coefficients of thermal expansion of the silicon substrate and the silicon oxide film. Thus, cracks and breaks are apt to be produced in the silicon oxide film. Accordingly, it is difficult to form an adequate support film using the silicon oxide film alone.

In order to solve this problem, the present inventors proposed to use a silicon oxide film or a silicon nitride film formed by the sputtering method as the support film. However, in this case, the support film becomes bent slightly due to the residual stress remaining therein. The bend of the support film is impossible to remove by thermal treatment in the case of the silicon oxide film. In the case of the silicon nitride film, it is possible to remove the bend by processing the support film thermally at a temperature of 800°C or more, but many problems are caused by thermal treatment at such a high temperature.

On the other hand, the use of an aluminium oxide film as the support film, formed by the sputtering method, was also considered. Although the film is again bent slightly in the case of the aluminium oxide film, the bend thereof can be removed by thermal treatment at a relatively low temperature of about 500°C. The reason why it is possible to use such a low temperature is that the aluminium oxide has a coefficient of thermal expansion larger than that of the silicon substrate. However, many defects due to contaminants such as dust are contained in the aluminium oxide film and, therefore, upon etching the silicon substrate, the etchant penetrating through these defects causes etch pits therein.

The present invention aims to provide a silicon micro sensor which does not suffer from the above-mentioned disadvantages.

According to one aspect of the present invention, there is provided a silicon micro sensor comprising a silicon substrate, a support film disposed on a surface of the substrate with a portion of said support film extending over a recess formed in said substrate, and a sensor supported on said portion of the support film, characterised in that said support film comprises a silicon oxide layer formed on the substrate by thermal oxidation and an aluminium oxide layer formed on the silicon oxide layer by sputtering.

According to another aspect, the present invention also provides a method for the manufacture of a support film of a silicon micro sensor which supports a sensor element thereon, comprising the steps of:
forming a silicon oxide film on a silicon substrate by thermal oxidation;
forming an aluminium oxide film on the silicon oxide film by sputtering;
forming a mask for etching the silicon substrate by photolithographic processing of the aluminium oxide film and the silicon oxide film; and
etching the silicon substrate using said mask to form the support element for the sensor element.

It is desirable to form the aluminium oxide film so as to have a thickness which is greater than that of the silicon oxide film. The aluminium oxide film, if it is thicker than the silicon oxide film, is hardly affected by the residual stress remaining in the silicon oxide film due to the thermal stress caused during the thermal oxidation process. However, a small residual stress (compression stress) remains in the aluminium oxide film at this stage. In order to release the residual stress in the aluminium oxide film, it is desirable to thermally treat it at a temperature within the range 500 to 800°C, preferably 600 to 700°C. Since the coefficient of thermal expansion of the aluminium oxide film is greater than that of the silicon substrate, tension stress is generated during the thermal treatment. The residual stress in the aluminium oxide film is thereby cancelled.

Further, if the temperature for the thermal treatment is set at a higher level within the range of 500 to 800°C, suitable tension stress remains in the support film. The residual stress contributes to flattening of the surface of the aluminium oxide film.

Upon etching of the silicon substrate, the silicon oxide film of the support film serves to prevent the formation of etch pits in the silicon substrate, which might be caused if the support film comprises only of a single layer of aluminium oxide.

On the support element thus formed, a sensor element such as a thin film is formed in order to obtain a silicon micro sensor. The silicon micro sensor thus manufactured has no etch pits in its silicon substrate and has a flat support element.

The present invention will become more apparent when the preferred embodiment is described in detail with reference of accompanied drawings, in which:
Fig. 1(a) is a plan view of a silicon micro sensor according to a preferred embodiment of the invention;
Fig. 1(b) is a cross-sectional view of the silicon micro sensor along line I-I of Fig. 1(a);
Figs. 2(a), 2(b), 2(c), 2(d) and 2(e) are cross-sectional views showing the steps of a manufacturing method for the silicon micro sensor of Figure 1;
Figs. 3(a), 4(a) and 5(a) are plan views of conventional silicon micro sensors of bridge type, cantilever type and diaphragm type, respectively; and
Figs. 3(b), 4(b) and 5(b) are cross-sectional views along lines III-III, IV-IV and V-V of Figs. 3(a), 4(a) and 5(a), respectively.

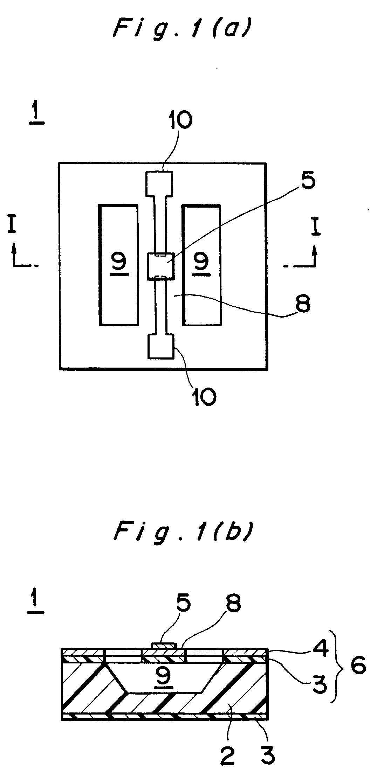

Fig. 1(a) shows a plan view of the silicon micro sensor of bridge type according to the preferred embodiment of the present invention and Fig. 1(b) shows a cross-section of the silicon micro sensor along line I-I of Fig. 1(a).

As shown in Figs. 1(a) and 1(b), the silicon micro sensor 1 comprises a silicon substrate 2, a silicon oxide film 3 formed by thermal oxidation, an aluminium oxide film 4 formed on the silicon oxide film, and a sensor film 5 formed on the aluminium oxide film 4.

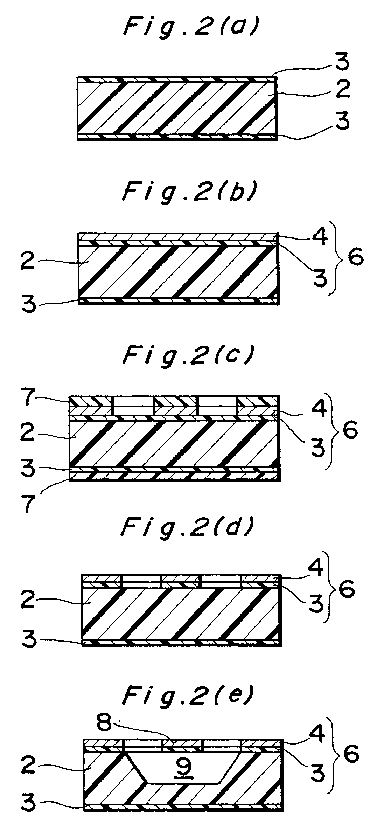

Next, the method for manufacturing the silicon micro sensor of Figure 1 will be explained with reference to Figs. 2(a) to 2(e), which show thermal oxidation, sputtering, thermal treatment, etching and sensor film forming processes, respectively.

In the thermal oxidation process, as shown in Fig. 2(a), the major surfaces of the silicon substrate 2 are oxidised using the thermal oxidation method to form silicon oxide films 3 and 3, each having a thickness of about 10nm (100Å) to several hundred nm (thousand Å).

In the sputtering process, as shown in Fig. 2(b), the aluminium oxide film 4 is formed on the upper silicon oxide film 3 so as to have a thickness of 100nm (1,000 Å) to several µm.

The sputtering process is performed by radio-frequency magnetron sputtering of sintered Al₂O₃ target in Ar gas. In the sputtering process, the silicon substrate 2 is heated up to about 300°C and the sputtering electric power is about 3 W/cm². The aluminium oxide film 4 is desirably formed so as to have a thickness greater than that of the silicon oxide film 3. Thus, the silicon oxide film 3 and the aluminium oxide film 4 are formed stacked on the surface of the silicon substrate 2. These two oxide films form a support film 6.

In the thermal treatment process, the silicon substrate 2 on which the silicon oxide film 3 and the aluminium oxide film 4 are formed is treated thermally at a temperature of 500°C to 800°C, preferably at 700°C, for three hours in order to sinter the support film 6.

In the etching process, as shown in Fig. 2(c), a photoresist film 7 having a predetermined pattern, such as, for example, a bridge type pattern, is formed on the aluminium oxide film 4 and the lower silicon oxide film 3 is covered with another photoresist film 7 entirely. Thereafter, the aluminium oxide film 4 is etched so as to have the same pattern as that of the upper photoresist film 7 using phosphoric acid.

Next, the upper silicon oxide film 3 is etched using buffered hydrofluoric acid, as shown in Fig. 2(d) and, then, the upper and lower photoresist films 7 and 7 are removed.

Then, the silicon substrate 2, covered with a mask comprising the aluminium oxide film 4 and the silicon oxide film 3, is etched using EPW liquid (mixture of ethylenediamine, pyrocatechol and water), being heated up to a temperature near the boiling point thereof. As shown in Fig. 2(e), a hollow portion 9 is formed in the silicon substrate 2 as a result of the etching. The portion of the support film 6 which bridges the hollow portion 9 constitutes a support element 8 for supporting the sensor element. Thereafter, a sensor film 5 and associated electrodes 10 and 10 are formed on the support element 8, as shown in Figs. 1(a) and 1(b), and, thereby, a complete silicon micro sensor is obtained.

The silicon micro sensor 1 thus obtained has the following merits.

First of all, the surface of the support film 6 is flattened by the tensile force which is caused in the aluminium oxide film 4 during the thermal treatment process, since the coefficient of thermal expansion of the aluminium oxide film 4 is larger than that of the silicon substrate 2.

Secondly, no etch pits are produced in etching the silicon substrate 2, since the support film 6 acting as a mask for etching includes the silicon oxide film 3, which is capable of preventing the etchant from penetrating therethrough.

Thus, according to the present embodiment, silicon micro sensors having a high performance and reliability as products can be obtained.

Further, in the above-described manufacturing method for silicon micro sensors, only innoxious gas, such as argon gas, is used in the forming of the films and, accordingly, the cost of the manufacturing equipment is low in comparison with conventional equipment using the CVD method.

Also, according to the present embodiment, the thermal treatment can be done at a relatively low temperature. Therefore, heat damage to individual portions of the sensor can be avoided.

As to the sensor film 5, various materials can be utilised in accordance with the use of the silicon micro sensor, for example as an infrared sensor, a gas sensor, a humidity sensor, a pressure sensor or the like.

Although only the bridge type sensor is described in the preferred embodiment above, it will be appreciated that the present invention is applicable equally to the cantilever-type sensor and/or the diaphragm-type sensor.

The preferred embodiments described herein are illustrative and not restrictive, the scope of the invention being indicated by the claims and all variations which come within the meanings of the claims are intended to be embraced herein.

## Claims

1. A silicon micro sensor comprising a silicon substrate 2, a support film disposed on a surface of the substrate with a portion (8) of said support film extending over a recess (9) formed in said substrate, and a sensor (5) supported on said portion (8) of the support film, characterised in that said support film comprises a silicon oxide layer (3) formed on the substrate by thermal oxidation and an aluminium oxide layer (4) formed on the silicon oxide layer by sputtering.

2. A silicon micro sensor according to claim 1, in which the thickness of the aluminium oxide film (4) is greater than that of the silicon oxide film (3).

3. A silicon micro sensor according to claim 2, in which the thickness of the silicon oxide film (3) is about 10nm (100 Å) to several hundred (thousand Å), and the thickness of the aluminium oxide film (4) is about 100nm (1000 Å)to several µm.

4. A method for the manufacture of a support film of a silicon micro sensor which supports a sensor element thereon, comprising the steps of:
forming a silicon oxide film (3) on a silicon substrate (2) by thermal oxidation;
forming an aluminium oxide film (4) on the silicon oxide film (3) by sputtering;
forming a mask for etching the silicon substrate (2) by photolithographic processing of the aluminium oxide film (4) and the silicon oxide film (3); and
etching the silicon substrate (2) using said mask to form the support element for the sensor element.

5. A method according to claim 4, further comprising the step of thermally treating the silicon oxide film (3) and the aluminium oxide film (4) at a temperature within the range 500 to 800°C.

6. A method according to claim 4 or claim 5, in which the aluminium oxide film (4) is formed having a thickness greater than the thickness of the silicon oxide film.

## Patentansprüche

1. Mikrosensor mit einem Siliziumsubstrat 2, einer Trägerschicht auf der Oberfläche des Substrats, wobei sich die Trägerschicht mit einem Teil (8) über eine in dem Substrat gebildete Aussparung (9) erstreckt, und einem Sensor (5), der auf dem Teil (8) der Trägerschicht gehalten wird,
***dadurch gekennzeichnet,*** daß die Trägerschicht eine auf dem Substrat durch thermische Oxidation gebildete Siliziumoxidschicht (3) und eine auf der Siliziumoxidschicht durch Sputtern gebildete Aluminiumoxidschicht (4) umfaßt.

2. Mikrosensor nach Anspruch 1, bei dem die Dicke der Aluminiumoxidschicht (4) größer als die der Siliziumoxidschicht (3) ist.

3. Mikrosensor nach Anspruch 2, bei dem die Dicke der Siliziumoxidschicht (3) etwa 10 nm (100 Å) bis einige Hundert nm (Tausend Å) und die Dicke der Aluminiumoxidschicht (4) etwa 100 nm (1000 Å) bis einige um beträgt.

4. Verfahren zur Herstellung einer Trägerschicht eines Mikrosensors, die darauf ein Sensorelement trägt, mit den Schritten:
Bilden einer Siliziumoxidschicht (3) auf einem Siliziumsubstrat (2) durch thermische Oxidation;
Bilden einer Aluminiumoxidschicht (4) auf der Siliziumoxidschicht (3) durch Sputtern;
Bilden einer Maske zum Ätzen des Siliziumsubstrats (2) durch photolithographische Bearbeitung der Aluminiumoxidschicht (4) und der Siliziumoxidschicht (3); und
Ätzen des Siliziumsubstrats (2) mit der Maske, um das Trägerelement für das Sensorelement zu bilden.

5. Verfahren nach Anspruch 4, weiter umfassend die Wärmebehandlung der Siliziumoxidschicht (3) und der Aluminiumoxidschicht (4) bei einer Temperatur im Bereich von 500 bis 800°C.

6. Verfahren nach Anspruch 4 oder 5, bei dem die Aluminiumoxidschicht (4) mit einer größeren Dicke als die Siliziumoxidschicht (3) gebildet wird.

## Revendications

1. Micro-détecteur au silicium comprenant un substrat de silicium (2), un film de support disposé sur une surface du substrat, une partie (8) dudit film de support s'étendant au-dessus d'un évidement (9) formé dans ledit substrat, et un détecteur (5) supporté sur ladite partie (8) du film de support, caractérisé en ce que ledit film de support comprend une couche d'oxyde de silicium (3) formée sur le substrat par oxydation thermique, et une couche d'oxyde d'aluminium (4) formée sur la couche d'oxyde de silicium par pulvérisation cathodique.

2. Micro-détecteur au silicium selon la revendication 1, dans lequel l'épaisseur du film d'oxyde d'aluminium (4) est supérieure à celle du film d'oxyde de silicium (3).

3. Micro-détecteur au silicium selon la revendication 2, dans lequel l'épaisseur du film d'oxyde de silicium (3) est comprise entre environ 10 nm (100 Å) et plusieurs centaines de nm (plusieurs milliers de Å), et l'épaisseur du film d'oxyde d'aluminium (4) est comprise entre environ 100 nm (1000 Å) et plusieurs µm.

4. Procédé pour la fabrication d'un film de support d'un micro-détecteur au silicium qui supporte sur lui un élément de détection, comprenant les étapes consistant à:
former un film d'oxyde de silicium (3) sur un substrat de silicium (2) par oxydation thermique;
à former un film d'oxyde d'aluminium (4) sur le film d'oxyde de silicium (3) par pulvérisation cathodique;
à former un masque pour attaquer le substrat de silicium (2) par traitement photolithographique du film d'oxyde d'aluminium (4) et du film d'oxyde de silicium (3); et
à attaquer le substrat de silicium (2) en utilisant ledit masque pour former l'élément de support pour l'élément de détection.

5. Procédé selon la revendication 4, comprenant en outre l'étape consistant à traiter thermiquement le film d'oxyde de silicium (3) et le film d'oxyde d'aluminium (4) à une température comprise dans la gamme allant de 500 à 800°C.

6. Procédé selon la revendication 4 ou la revendication 5, dans lequel le film d'oxyde d'aluminium (4) est formé de façon à présenter une épaisseur supérieure à l'épaisseur du film d'oxyde de silicium.
